(19) Europäisches Patentamt
European Patent Office
Office européen des brevets

(11) **EP 2 218 514 B1**

(12) **EUROPÄISCHE PATENTSCHRIFT**

(45) Veröffentlichungstag und Bekanntmachung des Hinweises auf die Patenterteilung:
**26.04.2017 Patentblatt 2017/17**

(21) Anmeldenummer: **09405024.2**

(22) Anmeldetag: **09.02.2009**

(51) Int Cl.:
***B05B 7/14*** *(2006.01)*    ***B65G 53/34*** *(2006.01)*

(54) **Beschichtungspulver-Versorgungs-vorrichtung**

Coating powder supply device

Dispositif d'alimentation de poudre de revêtement

(84) Benannte Vertragsstaaten:
**DE FR IT**

(43) Veröffentlichungstag der Anmeldung:
**18.08.2010 Patentblatt 2010/33**

(73) Patentinhaber: **J. Wagner AG**
**9450 Altstätten (CH)**

(72) Erfinder:
• **Volonte, Luigi, Carlo, Maria**
**23868 Valmadrera (IT)**
• **von keudell, leopold**
**88682 Salem (DE)**

(74) Vertreter: **Nückel, Thomas**
**Patentanwaltskanzlei Nückel**
**Weinberglistrasse 4**
**6005 Luzern (CH)**

(56) Entgegenhaltungen:
**EP-A- 0 029 236    EP-A- 1 222 963**
**EP-A- 1 953 098    WO-A-2008/028613**
**DE-A1- 4 344 701    US-A1- 2002 139 301**

## Beschreibung

### Technisches Gebiet

Die Erfindung betrifft eine Beschichtungspulver-Versorgungsvorrichtung sowie ein Verfahren zum Betreiben der Beschichtungspulver-Versorgungsvorrichtung.

Um Werkstücke mit Beschichtungspulver oder kurz Pulver zu beschichten, wird das Pulver mit Hilfe einer Pulverversorgungsvorrichtung zu einer Pulversprühpistole transportiert und dort mit der Pulversprühpistole auf das Werkstück aufgesprüht. Anschliessend wird das mit Pulver beschichtete Werkstück erhitzt, so dass sich das Pulver verflüssigt. Schliesslich wird das Werkstück abgekühlt, das Pulver härtet aus und bildet eine geschlossene Deckschicht auf dem Werkstück.

Die Pulverversorgungsvorrichtung umfasst einen Pulvervorratsbehälter, der zur Aufbewahrung des Beschichtungspulvers dient. Zudem umfasst sie eine Pulverfördervorrichtung, mit der das Pulver aus dem Pulvervorratsbehälter herausgesaugt und zur Pulversprühpistole transportiert wird. Die Pulversprühpistole kann als manuelle oder automatische Pulversprühvorrichtung ausgebildet sein und weist an ihrem zum Werkstück hin gerichteten Auslass eine Sprühdüse oder einen Rotationszerstäuber auf.

### Stand der Technik

Eine Pulverversorgungsvorrichtung, wie sie eingangs beschrieben ist, ist aus der Offenlegungsschrift DE 10 2005 060 833 A1 bekannt. Eine Pulverversorgungseinrichtung gemäß dem Oberbegriff von Anspruch 1 ist in EP 1 222 963 offenbart.

### Darstellung der Erfindung

Eine Aufgabe der Erfindung ist es, eine Beschichtungspulver-Versorgungsvorrichtung sowie ein Verfahren zum Betreiben der Beschichtungspulver-Versorgungsvorrichtung anzugeben bei der/dem die Qualität der Beschichtung des Werkstücks gleichbleibend hoch ist.

Die Aufgabe wird durch eine Beschichtungspulver-Versorgungsvorrichtung mit den Merkmalen gemäss Patentanspruch 1 gelöst.

Vorteilhafte Weiterbildungen der Erfindung ergeben sich aus den in den abhängigen Patentansprüchen angegebenen Merkmalen.

In einer Weiterbildung der Beschichtungspulver-Versorgungsvorrichtung ist eine Halterung zum Halten des Pulverförderers vorgesehen, die derart ausgebildet ist, dass der Pulverförderer durch die Waage nicht mitgewogen wird.

Bei einer anderen Weiterbildung der Beschichtungspulver-Versorgungsvorrichtung ist die Waage unter dem Pulvervorratsbehälter angeordnet.

Bei einer weiteren Ausführungsform der Beschichtungspulver-Versorgungsvorrichtung ist eine Steuerung vorgesehen, die derart ausgebildet und betreibbar ist, dass sie das Messsignal der Waage auswertet, um die Pulvermenge im Pulvervorratsbehälter zu ermitteln.

Darüber hinaus kann die Beschichtungspulver-Versorgungsvorrichtung eine Leitung aufweisen, um Pulver in den Pulvervorratsbehälter zu transportieren.

Vorteilhafterweise umfasst die erfindungsgemässe Beschichtungspulver-Versorgungsvorrichtung eine Absaugleitung, um Luft aus dem Pulvervorratsbehälter zu saugen.

Darüber hinaus kann bei der Beschichtungspulver-Versorgungsvorrichtung der Pulverförderer eine Ansaugleitung und der Pulvervorratsbehälter seitlich eine Pulverauslassöffnung aufweisen, mit der die Ansaugleitung des Pulverförderers verbunden ist.

Bei einer Weiterbildung der Beschichtungspulver-Versorgungsvorrichtung ist die Ansaugleitung flexibel ausgebildet.

Bei einer anderen Weiterbildung der Beschichtungspulver-Versorgungsvorrichtung weist der Pulvervorratsbehälter eine Fluidisiereinheit auf.

Die erfindungsgemässe Beschichtungspulver-Versorgungsvorrichtung kann in einer Pulverbeschichtungsanlage verwendet werden.

Eine Pulverbeschichtungsanlage mit der oben beschriebenen Beschichtungspulver-Versorgungsvorrichtung kann einen weiteren Pulvervorratsbehälter umfassen, um Pulver für die Beschichtungspulver-Versorgungsvorrichtung vorzuhalten. Zudem kann eine weitere Waage vorgesehen sein, um das im weiteren Pulvervorratsbehälter befindliche Pulver zu wiegen.

Zudem wird ein Verfahren zum Betreiben der Beschichtungspulver-Versorgungsvorrichtung vorgeschlagen, bei dem das von der Waage erzeugte Messsignal herangezogen wird, um die im Pulvervorratsbehälter befindliche Pulvermenge zu ermitteln.

Bei einer weiteren Variante des Verfahrens zum Betreiben der Beschichtungspulver-Versorgungsvorrichtung ist vorgesehen, dass in bestimmten zeitlichen Abständen die im Pulvervorratsbehälter befindliche Pulvermenge und daraus die Änderung der Pulvermenge im Pulvervorratsbehälter ermittelt wird.

Bei dem Verfahren zum Betreiben der Beschichtungspulver-Versorgungsvorrichtung kann vorgesehen sein, dass das Ansaugrohr des Pulverförderers aus dem Pulvervorratsbehälter heraus bewegt wird und dabei vom am Ansaugrohr anhaftenden Pulver befreit wird.

Schliesslich wird ein Verfahren zum Betreiben der Pulverbeschichtungsanlage vorgeschlagen, bei dem in bestimmten zeitlichen Abständen die im weiteren Pulvervorratsbehälter befindliche Pulvermenge und daraus der Gesamtpulververbrauch ermittelt wird.

## Kurze Beschreibung der Zeichnungen

Im Folgenden wird die Erfindung mit mehreren Ausführungsbeispielen anhand von sechs Figuren weiter erläutert.

Figur 1    zeigt eine erste mögliche Ausführungsform der erfindungsgemässen Beschichtungspulver-Versorgungsvorrichtung in der Seitenansicht, wobei sich der Pulvervorratsbehälter in einer ersten Stellung befindet.

Figur 2    zeigt die erste Ausführungsform der erfindungsgemässen Beschichtungspulver-Versorgungsvorrichtung in der Seitenansicht, wobei sich der Pulvervorratsbehälter in einer zweiten Stellung befindet.

Figur 3    zeigt eine zweite nicht erfindungsgemäße Ausführungsform der Beschichtungspulver-Versorgungsvorrichtung in der Seitenansicht, wobei sich die Pulverförderer in einer ersten Stellung befinden.

Figur 4    zeigt die zweite nicht erfindungsgemäße Ausführungsform der Beschichtungspulver-Versorgungsvorrichtung in der Seitenansicht, wobei sich die Pulverförderer in einer zweiten Stellung befinden.

Figur 5    zeigt eine dritte nicht erfindungsgemäße Ausführungsform der Beschichtungspulver-Versorgungsvorrichtung in der Seitenansicht.

Figur 6    zeigt eine vierte mögliche Ausführungsform der erfindungsgemässen Beschichtungspulver-Versorgungsvorrichtung in der Seitenansicht.

## Wege zur Ausführung der Erfindung

Erste Ausführungsform

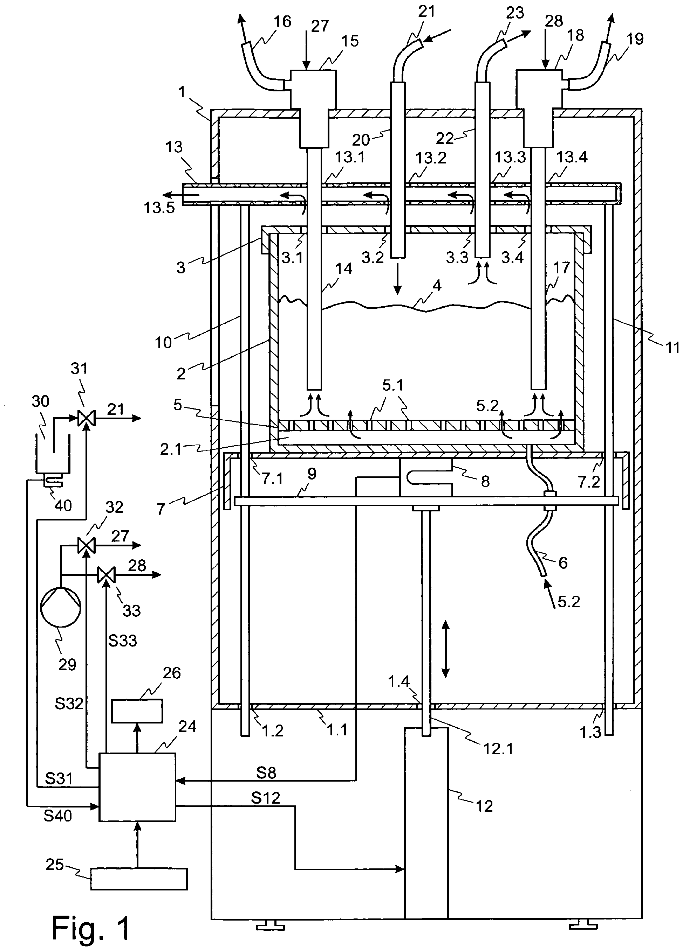

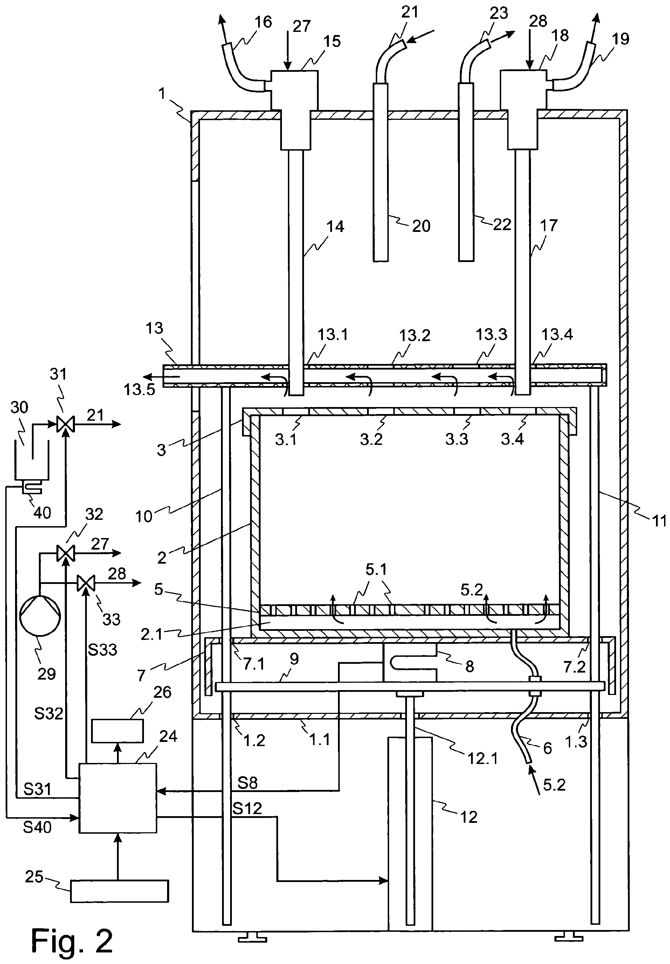

Im Folgenden wird die erste Ausführungsform der Beschichtungspulver-Versorgungsvorrichtung anhand der Figuren 1 und 2 weiter erläutert. In den Figuren 1 und 2 ist die Beschichtungspulver-Versorgungsvorrichtung in der Seitenansicht teilweise im Schnitt dargestellt.

Die in Figur 1 dargestellte erste Ausführungsform der erfindungsgemässen Beschichtungspulver-Versorgungsvorrichtung umfasst ein Gehäuse 1, das wiederum einen Zwischenboden 1.1 aufweist. Unterhalb des Zwischenbodens 1.1 ist ein pneumatisch angetriebener Zylinder 12 mit einem Kolben 12.1 angeordnet, der durch eine Öffnung 1.4 im Zwischenboden 1.1 ragt und eine untere Bodenplatte 9 trägt. Zwischen der unteren Bodenplatte 9 und einer parallel darüber angeordneten oberen Bodenplatte 7 befindet sich eine Waage 8. Auf der oberen Bodenplatte 7 steht ein Pulvervorratsbehälter 2 mit einem Deckel 3. Das Gehäuse 1 weist auf seiner Oberseite Öffnungen auf, durch die eine erste Pulverfördervorrichtung 15 mit einem Ansaugrohr 14, eine zweite Pulverfördervorrichtung 18 mit einem Ansaugrohr 17, ein Pulverrohr 20 und ein Absaugrohr 22 ragen. Auch der Deckel 3 des Pulvervorratsbehälters 2 weist an den entsprechenden Stellen Öffnungen 3.1, 3.2, 3.3 und 3.4 auf, durch die die beiden Ansaugrohre 14 und 17 sowie das Pulverrohr 20 und das Absaugrohr 22 hindurch in den Pulvervorratsbehälter 2 reichen.

Im Inneren des Pulvervorratsbehälters 2 befindet sich ein Doppelboden 5, der im Folgenden auch als Fluidisierboden bezeichnet wird. Der Fluidisierboden 5 bildet mit den Seitenwänden und dem Boden des Pulvervorratsbehälters 2 eine Fluidisierluftkammer 2.1. Der Fluidisierboden 5 weist eine Reihe kleiner Löcher 5.1 auf, durch die Fluidisierluft 5.2 von unten in den Pulvervorratsbehälter 2 strömen kann, um das im Pulvervorratsbehälter 2 befindliche Pulver 4 zu fluidisieren. Statt der Löcher 5.1 kann der Fluidisierboden 5 auch Poren aufweisen. Die Poren können beispielsweise durch einen gesinterten Kunststoff gebildet werden.

Die Pulverfördervorrichtung 15 und die Pulverfördervorrichtung 18 können beispielsweise mit Druckluft betriebene Injektoren, Kolbenpumpen, Membranpumpen oder Vakuumförderer sein.

Ein geeigneter Injektor ist beispielsweise in der Druckschrift DE 10 2005 056 006 B4 beschrieben. Der Injektor arbeitet nach dem Venturi-Prinzip. Dabei wird mit Hilfe eines kontinuierlichen Förderluftstroms ein Unterdruck im Injektor erzeugt, der dazu führt, dass Pulver aus dem Pulvervorratsbehälter angesaugt und zusammen mit dem Förderluftstrom in Richtung Pulversprühpistole transportiert wird. Zusätzlich wird dem Injektor Dosierluft zugeführt, um die Förderung des Pulvers zur Pistole zu unterstützen.

In der Druckschrift DE 10 2005 006 522 B3 ist ein als Pulverförderer 15 beziehungsweise 18 geeigneter Vakuumförderer beschrieben. Der Förderer weist ein Einlassventil, ein Auslassventil und eine aus einem elastischen Förderkammerschlauch gebildete Pulverförderkammer auf. Die Pulverförderkammer ist zwischen dem Einlassventil und dem Auslassventil angeordnet und weist einen Förderlufteinlass auf. Das Volumen der Pulverförderkammer ist durch eine Verformung des Förderkammerschlauchs veränderbar.

Das von der Pulverfördervorrichtung 15 aus dem Pulvervorratsbehälter 2 geförderte Pulver 4 wird durch einen Pulverschlauch 16, der an die Pulverfördervorrichtung 15 angeschlossen ist, in Richtung Pulversprühpistole transportiert. Das von der Pulverfördervorrichtung 18 aus dem Pulvervorratsbehälter 2 geförderte Pulver 4 wird durch einen Pulverschlauch 19, der an die Pulverfördervorrichtung 18 angeschlossen ist, zu einer weiteren Pulversprühpistole transportiert.

Die in Figur 1 gezeigte Ausführungsform der Beschichtungspulver-Versorgungsvorrichtung umfasst zudem ein Absaugrohr 13 mit vier Absaugöffnungen 13.1, 13.2, 13.3 und 13.4. Durch die erste Absaugöffnung 13.1 ragt das Ansaugrohr 14, durch die zweite Absaugöffnung 13.2 ragt das Pulverrohr 20, durch die dritte Absaugöffnung 13.3 ragt das Absaugrohr 22, und durch die vierte Absaugöffnung 13.4 ragt das Ansaugrohr 17. Das Absaugrohr 13 wird von zwei Stangen 10 und 11 getragen, die links und rechts vom Pulvervorratsbehälter 2 angeordnet sind. Die beiden Stangen 10 und 11 ragen durch entsprechende Öffnungen 7.1 und 7.2 in der oberen Bodenplatte 7 ohne diese zu berühren und sind an der unteren Bodenplatte 9 befestigt. Die unteren Enden der beiden Stangen 10 und 11 werden durch zwei Führungen 1.2 und 1.3 im Zwischenboden 1.1 geführt, so dass die Stangen 10 und 11 stabilisiert werden.

Eine Steuerung 24 ist vorgesehen, um die einzelnen Komponenten der Beschichtungspulver-Versorgungsvorrichtung zu steuern. Die Steuerung 24 umfasst dazu einen Regelkreis, der eingangsseitig mit der Waage 8 verbunden ist und dessen ausgangsseitige Stellsignale den pneumatischen Zylinder 12, ein erstes Ventil 31, ein zweites Ventil 32 und ein drittes Ventil 33 ansteuern. Um die Steuerung 24 bedienen zu können, beispielsweise um bestimmte Parameter einzustellen, ist diese eingangsseitig mit einer Tastatur 25, Stellknöpfen oder dergleichen verbunden. Darüber hinaus ist die Steuerung 24 ausgangsseitig mit einer Anzeige 26 verbunden. Mit Hilfe der Anzeige 26 kann beispielsweise der Betriebszustand der Beschichtungspulver-Versorgungsvorrichtung angezeigt werden.

Im Folgenden wird die Betriebsweise der in den Figuren 1 und 2 dargestellten Beschichtungspulver-Versorgungsvorrichtung beschrieben. Das von der Waage 8 erzeugte Messsignal S8 gibt Auskunft über die Menge des Pulvers 4, das sich im Vorratsbehälter 2 befindet. Damit die mit der Waage 8 vorgenommene Messung so wenig wie möglich durch Störgrössen beeinflusst wird, sind die beiden Pulverförderer 15 und 18 mit den dazugehörigen Ansaugrohren 14 und 17 sowie das Pulverrohr 20 und das Absaugrohr 23 weder mit dem Vorratsbehälter 2 noch mit dessen Deckel 3 verbunden. Wie aus Figur 1 zu entnehmen ist, ragen sie ohne den Deckel 3 zu berühren in den Vorratsbehälter 2. Auch das Absaugrohr 13 berührt weder den Vorratsbehälter 2 noch dessen Deckel 3. Die Stangen 10 und 11, die das Absaugrohr 13 tragen, berühren weder den Vorratsbehälter 2 noch dessen Deckel 3 noch den oberen Boden 7. Durch diesen Aufbau wird sichergestellt, dass das Messsignal S8 der Waage 8 lediglich die durch den Vorratsbehälter 2, den Deckel 3 und das im Vorratsbehälter befindliche Pulver 4 erzeugten Gewichtskräfte F erfasst.

Die Waage 8 kann beispielsweise mit Dehnungsmessstreifen ausgestattet sein. Die durch die soeben erwähnten Gewichtskräfte F erzeugte Verformung der Dehnungsmessstreifen erzeugt dann das elektrische Signal S8 am Ausgang der Waage 8.

Solange mit der Beschichtungspulver-Versorgungsvorrichtung Pulver zu den Pulversprühpistolen gefördert wird - im Folgenden wird dieser Betriebszustand als Förderbetrieb bezeichnet - befindet sich der Pulvervorratsbehälter 2 in der in Figur 1 gezeigten oberen Stellung.

Die Steuerung 24 ermittelt aus dem Messsignal S8 den Füllstand im Vorratsbehälter 2 und steuert abhängig davon mit Hilfe des Steuersignals S12 den Zylinder 12, mit dem Steuersignal S31 das Ventil 31, mit dem Steuersignal S32 das Ventil 32 und mit dem Steuersignal S33 das Ventil 33.

Soll im Förderbetrieb beispielsweise Pulver von einem Frischpulverbehälter 30 über den Pulverschlauch 21 und das Pulverrohr 20 in den Pulvervorratsbehälter 2 gefördert werden, wird das Ventil 31 durch das Stellsignal S31 geöffnet. Der Overspray, welcher während der Beschichtung der Werkstücke anfällt, kann aus der Beschichtungskabine abgesaugt, mit einem in den Figuren nicht gezeigten Zyklon zurück gewonnen und in den Frischpulverbehälter 30 zurück transportiert werden.

Statt die Zuleitung des Ventils 31 mit dem Frischpulverbehälter 30 zu verbinden, kann diese Zuleitung auch mit dem Ausgang des Zyklons verbunden sein. Auf diese Weise kann Overspray, welches während der Beschichtung der Werkstücke angefallen ist und im Zyklon rückgewonnen wurde, vom Zyklon über das Ventil 31, den Pulverschlauch 21 und das Pulverrohr 20 in den Pulvervorratsbehälter 2 gefördert werden.

Vorteilhafter Weise steht der Frischpulverbehälter 30, der im Folgenden auch als weiterer Pulvervorratsbehälter bezeichnet wird, auf einer Waage 40, die ähnlich oder gleich der Waage 8 aufgebaut sein kann. Mit der Waage 40 wird das Gewicht des Frischpulverbehälters 30 und der im Frischpulverbehälter 30 vorhandenen Menge Pulver gemessen. Durch eine Kalibrierung kann von dem Gewicht, das von der Waage 40 ermitteltet wurde, das Eigengewicht des Frischpulverbehälters 30 abgezogen werden, so dass letztlich die eigentlich interessierende Grösse, nämlich die Pulvermenge im Frischpulverbehälter 30 ermittelt werden kann. Diese Berechung findet in der Steuerung 24 statt.

Wenn auch der Overspray, wie oben beschrieben, wieder dem Frischpulverbehälter 30 zugeführt wird, kann mit Hilfe der Steuerung 24 die gesamte während der Beschichtung verbrauchte Pulvermenge ermittelt werden. Das Wissen über den Gesamtpulververbrauch ist zum Beispiel hilfreich, wenn man wissen möchte, wie hoch der Tagesverbrauch an Pulver war oder wie viel Pulver von einer bestimmten Farbe oder für eine bestimmte Charge oder Losgrösse verbraucht wurde. Der Gesamtpulververbrauch wird ermittelt, indem mit der Waage 40 und der Steuerung 24 die Pulvermenge P(t1), P(t2) ... P(tn) im Frischpulverbehälter 30 zu verschiedenen Zeitpunkten t1, t2 ... tn ermittelt wird. Die Differenz der ermittelten Pulvermengen

$$\Delta P(tx, ty) = P(tx) - P(ty)$$

gibt dann die zwischen den Zeitpunkten tx und ty verbrauchte Pulvermenge an. So gibt beispielsweise die Differenz der ermittelten Pulvermengen ΔP(t1, t2) = P(t1) - P(t2) die zwischen den Zeitpunkten t1 und t2 verbrauchte Pulvermenge an.

Für den Fall, dass der Pulverförderer 15 und der Pulverförderer 18 als Injektoren ausgebildet sind, werden diese, wie folgt beschrieben, betrieben. Im Förderbetrieb wird durch das Stellsignal S32 das Ventil 32 geöffnet, so dass Förderdruckluft, welche von einer Druckluftquelle 29 stammt, durch das geöffnete Ventil 32 und einen Druckluftschlauch 27 zum Pulverförderer 15 strömt. Zudem wird im Förderbetrieb durch das Stellsignal S33 das Ventil 33 geöffnet, so dass die von der Druckluftquelle 29 stammende Förderdruckluft durch das geöffnete Ventil 33 und einen Druckluftschlauch 28 zum Pulverförderer 18 strömt. Soll durch die Pulverförderer 15 und 18 kein Pulver mehr zu den Pulversprühpistolen gefördert werden, veranlasst die Steuerung 24, dass die beiden Ventile 32 und 33 geschlossen werden.

Durch eine Schlauchleitung 6 wird Fluidisierluft 5.2 in die Fluidisierluftkammer 2.1 geblasen. Von dort strömt sie durch die Öffnungen 5.1 im Fluidisierboden 5 ins Pulver 4, lockert es auf und sorgt dafür, dass das Pulver durch die Ansaugrohre 14 und 17 besser angesaugt werden kann. Die Schlauchleitung 6 ist an der unteren Bodenplatte 9 befestigt und mündet in den Pulvervorratsbehälter 2. In diesem Bereich ist die Schlauchleitung 6 als flexibler Schlauch ausgebildet, damit sie die von der Waage 8 während des Beschichtungsbetriebs durchgeführten Wägungen nicht beeinflusst.

Durch den in der Steuerung 24 implementierten Regelkreis wird sichergestellt, dass das Pulverniveau im Pulvervorratsbehälter 2 konstant bleibt. Dies geschieht dadurch, dass mit der Waage 8 das Pulverniveau im Pulvervorratsbehälter 2 kontinuierlich ermittelt wird und durch das Pulverrohr 20 in den Pulvervorratsbehälter 2 so viel frisches (beziehungsweise rückgewonnenes) Pulver hineinströmt, wie Pulver durch die Pulverförderer 15 und 18 aus dem Pulvervorratsbehälter 2 abgesaugt wird. Dies hat den Vorteil, dass die Pulverförderer 15 und 18 bei exakt gleichbleibenden Umgebungsbedingungen, wie zum Beispiel Druck, Temperatur und Füllmenge, betrieben werden können. Die Regelung kann aber auch sich ändernde Umgebungsbedingungen berücksichtigen und die Pulverförderer 15 und 18 entsprechend steuern. Dies wiederum führt dazu, dass die Pulverförderer 15 und 18 eine konstante Pulvermenge fördern, was sich positiv auf eine gleichmässige Qualität der Beschichtung des Werkstücks auswirkt. Die Beschichtungspulver-Versorgungsvorrichtung kann dazu neben den beiden Waagen 8 und 40 auch noch einen Drucksensor für die Erfassung des Luftdrucks im Pulvervorratsbehälter 2 und einen Temperaturfühler für die Erfassung der Temperatur im Pulvervorratsbehälter 2 aufweisen, welche aber in den Figuren nicht dargestellt sind.

Durch die in den Pulvervorratsbehälter 2 einströmende Fluidisierluft kann im Pulvervorratsbehälter 2 überschüssige Luft entstehen. Diese wird durch das Absaugrohr 22 und den am Absaugrohr 22 angeschlossenen Schlauch 23 aus dem Pulvervorratsbehälter 2 abgesaugt. In der Regel wird die überschüssige Luft, die auch Pulverpartikel mit sich führt, einem Zyklonabscheider zugeführt, so dass das in der überschüssigen Luft enthaltene Pulver rückgewonnen werden kann.

Bevor die Beschichtungspulver-Versorgungsvorrichtung im Beschichtungsbetrieb arbeitet, wird vorteilhafter Weise eine Kalibrierung durchgeführt. Dadurch können das Gewicht des Vorratsbehälters 2, des Deckels 3 und weitere unerwünschte Grössen herausgerechnet werden, so dass die tatsächliche Pulvermenge im Pulvervorratsbehälter 2 genau bestimmt werden kann.

Die Kalibrierung kann beispielsweise wie folgt durchgeführt werden. Zuerst wird der leere Pulvervorratsbehälter 2 mit dem Deckel 3 auf den oberen Boden 7 gestellt, mit der Waage 8 gewogen und das Ergebnis, das einem ersten Messwert entspricht, in der Steuerung 24 gespeichert. Dann wird in den Pulvervorratsbehälter 2 ein erstes Eichgewicht gelegt und eine erneute Messung mit der Waage 8 durchgeführt. Das Ergebnis, das einem zweiten Messwert entspricht, wird ebenfalls in der Steuerung 24 gespeichert. In einem dritten Schritt wird in den Pulvervorratsbehälter 2 ein zweites Eichgewicht gelegt und eine erneute Messung mit der Waage 8 durchgeführt. Das Ergebnis, das einem dritten Messwert entspricht, wird ebenfalls in der Steuerung 24 gespeichert. Anhand der drei Messwerte kann nun mittels Interpolation eine Messkurve ermittelt werden, die aufzeigt, welcher Messwert welcher Pulvermenge entspricht.

Um den Pulvervorratsbehälter 2 der Beschichtungspulver-Versorgungsvorrichtung zu entleeren, kann die Beschichtungspulver-Versorgungsvorrichtung so lange im Beschichtungsbetrieb betrieben werden, bis durch die Pulverförderer 15 und 18 kein Pulver mehr angesaugt wird. Dieser Entleerungsvorgang erfolgt in der Regel dann, wenn sich kein zu beschichtendes Werkstück mehr in der Beschichtungskabine befindet. Das Pulver wird dann aus der Beschichtungskabine über das Zyklon wieder abgesaugt und dem Frischpulvervorratsbehälter 30 zugeführt.

Soll die Beschichtungspulver-Versorgungsvorrichtung anschliessend gereinigt werden - im Folgenden wird dieser Betriebszustand als Reinigungsbetrieb bezeichnet - wird der Pulvervorratsbehälter 2 zusammen mit dem oberen Boden 7, der Waage 8 und dem unteren Boden 9 mit Hilfe des Zylinders 12 nach unten bewegt. Der Pulvervorratsbehälter 2 befindet sich dann schliesslich in der in Figur 2 gezeigten unteren Stellung.

Während des Reinigungsbetriebs sind die Ventile 32 und 33 geschlossen, so dass die Pulverförderer 15 und 18 nicht mehr in Betrieb sind. Auch das Ventil 31 wird geschlossen, so dass über das Pulverrohr 20 kein Pulver mehr in den Pulvervorratsbehälter 2 transportiert wird. Während der Pulvervorratsbehälter 2 nach unten bewegt wird, werden die beiden Ansaugrohre 14 und 17 an den Absaugöffnungen 13.1 beziehungsweise 13.4 sowie das Pulverrohr 20 und das Absaugrohr 22 an den Absaugöffnungen 13.2 beziehungsweise 13.3 vorbeigeführt und das aussen an den Rohren 14, 17, 20 und 22 anhaftende Pulver durch das Absaugrohr 13 abgesaugt. Der Pfeil 13.5 kennzeichnet dabei die Strömungsrichtung der abgesaugten Luft. Um den Pulvervorratsbehälter 2 und den Deckel 3 zu reinigen, können diese auch aus der Beschichtungspulver-Versorgungsvorrichtung herausgehoben werden. Bei Bedarf kann der Pulvervorratsbehälter 2 auch durch einen anderen Pulvervorratsbehälter ersetzt werden.

Nicht erfindungsgemäße Ausführungsform

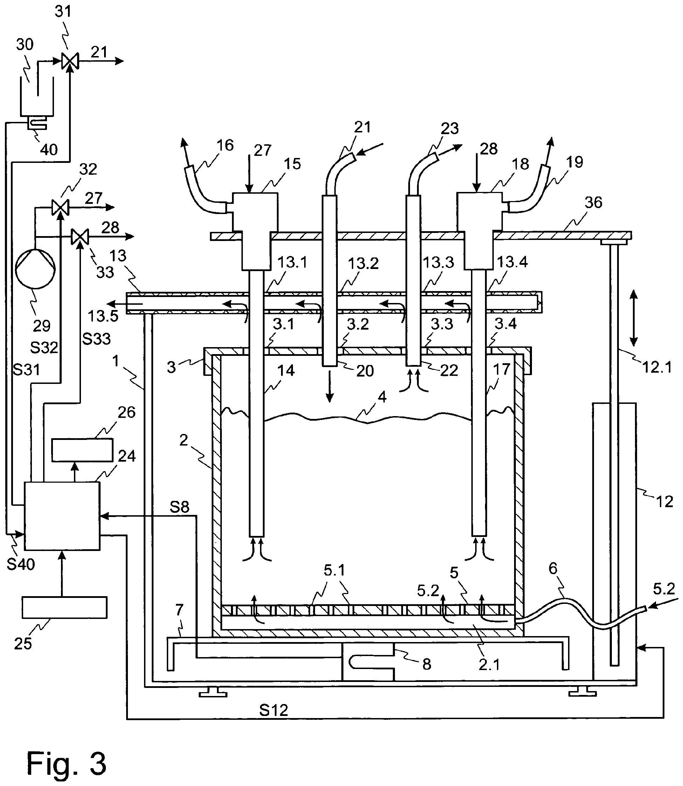

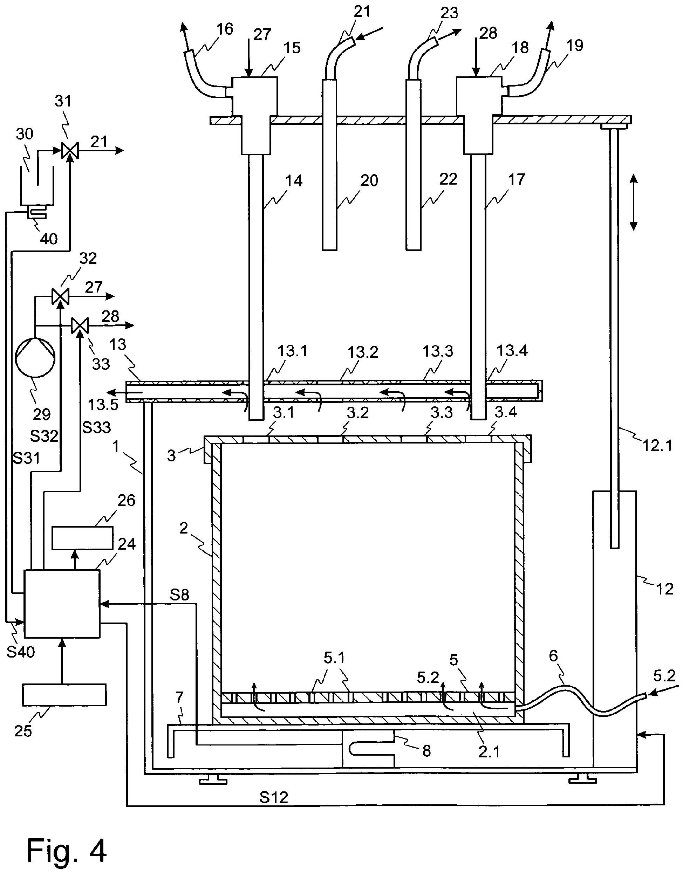

Im Folgenden wird die zweite nicht erfindungsgemäße Ausführungsform der Beschichtungspulver-Versorgungsvorrichtung anhand der Figuren 3 und 4 weiter erläutert. Die zweite nicht erfindungsgemäße Ausführungsform der Beschichtungspulver-Versorgungsvorrichtung unterscheidet sich im Aufbau von der in den Figuren 1 und 2 dargestellten ersten Ausführungsform der Beschichtungspulver-Versorgungsvorrichtung dadurch, dass während des Reinigungsbetriebs nicht der Pulvervorratsbehälter 2 nach unten, sondern der Pulverförderer 15 mit dem Ansaugrohr 14 und der Pulverförderer 18 mit dem Ansaugrohr 17 sowie das Pulverrohr 20 und das Absaugrohr 22 nach oben aus dem Pulvervorratsbehälter 2 heraus gezogen werden. Die beiden Pulverförderer 15 und 18 sowie das Pulverrohr 20 und das Absaugrohr 22 sind dazu auf einem Träger 36 montiert. Der pneumatisch betriebene Zylinder 12 mit dem Kolben 12.1 sind seitlich neben dem Pulvervorratsbehälter 2 angeordnet und bewegen den Träger 36 wahlweise auf oder ab.
Im Beschichtungsbetrieb und während des Entleerungsvorgangs arbeitet die zweite nicht erfindungsgemäße Ausführungsform auf die gleiche Weise wie die erste. Während des Reinigungsbetriebs sind die Ventile 32 und 33 geschlossen, so dass die Pulverförderer 15 und 18 nicht mehr in Betrieb sind. Auch das Ventil 31 wird geschlossen, so dass über das Pulverrohr 20 kein Pulver mehr in den Pulvervorratsbehälter 2 transportiert wird. Während die beiden Ansaugrohre 14 und 17 sowie das Pulverrohr 20 und das Absaugrohr 22 durch den Kolben 12.1 nach oben bewegt werden, werden sie an den Absaugöffnungen 13.1 bis 13.4 vorbeigeführt und das aussen an den Rohren 14, 17, 20 und 22 anhaftende Pulver wird durch das Absaugrohr 13 abgesaugt. Der Pfeil 13.5 kennzeichnet dabei die Strömungsrichtung der abgesaugten Luft. Gegen Ende des Hubvorgangs befinden sich die einzelnen Komponenten dann in der in Figur 4 gezeigten Stellung.
Da die beiden Ansaugrohre 14 und 17 sowie das Pulverrohr 20 und das Absaugrohr 22 bewegt werden, kann das Absaugrohr 13 stationär angeordnet sein.

Dritte nicht erfindungsgemäße Ausführungsform

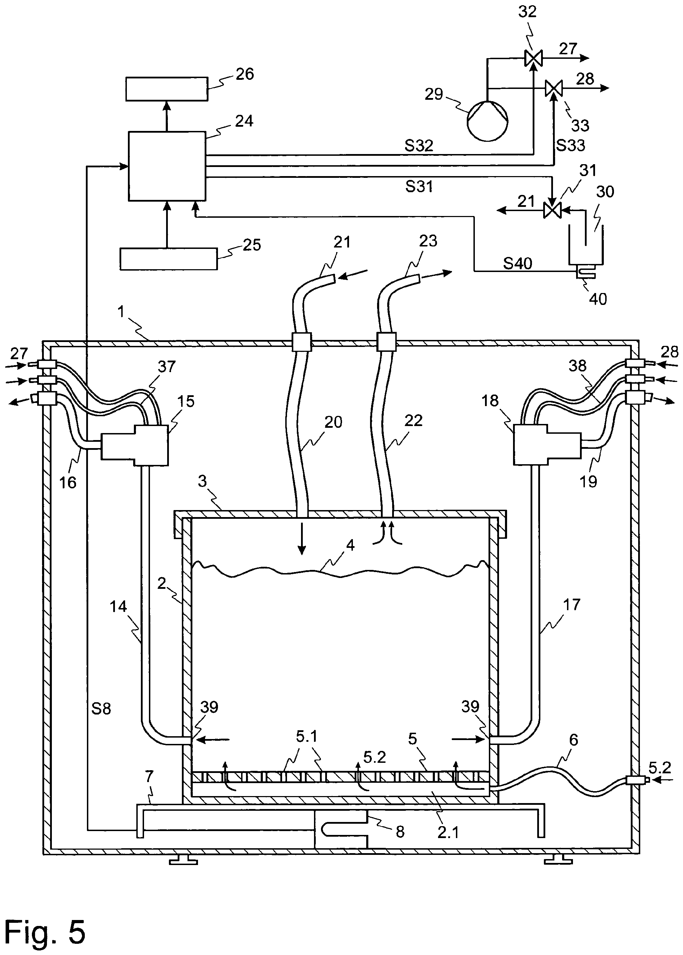

Im Folgenden wird die dritte nicht erfindungsgemäße Ausführungsform der Beschichtungspulver-Versorgungsvorrichtung anhand der Figur 5 weiter erläutert. Die dritte nicht erfindungsgemäße Ausführungsform der Beschichtungspulver-Versorgungsvorrichtung unterscheidet sich im Aufbau von der ersten und der zweiten Ausführungsform der Beschichtungspulver-Versorgungsvorrichtung dadurch, dass weder der Pulvervorratsbehälter 2 noch die Pulverförderer 15 und 18 zusammen mit dem Ansaugrohr 14 und dem Pulverrohr 20 bewegt werden. Die beiden Pulverförderer 15 und 18 sind starr über das Ansaugrohr 14 beziehungsweise 17 mit dem Pulvervorratsbehälter 2 verbunden. Der Pulvervorratsbehälter 2 weist im unteren Bereich seitlich jeweils eine Öffnung 39 auf, durch die die Ansaugrohre 14 und 17 das Pulver aus dem Vorratsbehälter 2 saugen können. Der am Pulverförderer 15 angeschlossene Pulverschlauch 16 ist am Gehäuse 1 befestigt. Der am Pulverförderer 18 angeschlossene Pulverschlauch 19 ist ebenfalls am Gehäuse 1 befestigt. Dabei sind die beiden Pulverschläuche 16 und 19 zwischen den Pulverförderern 15 und 18 einerseits und den Befestigungsstellen am Gehäuse 1 andererseits so flexibel, dass sie die während des Beschichtungsbetriebs mit der Waage 8 durchgeführten Wägungen nicht beeinflussen. Durch zu verschiedenen Zeitpunkten durchgeführte Differenzmessungen können die durch die Pulverschläuche 16 und 19 erzeugten Einflüsse auch kompensiert werden. Sinngemäss das Gleiche gilt für den Pulverschlauch 20, den Absaugschlauch 22, den Schlauch für Fluidisierluft 6, die beiden Förderluftschläuche 27 und 28 sowie für die Dosierluftschläuche 37 und 38. Über den Dosierluftschlauch 37 wird dem Pulverförderer 15 zusätzlich zur Förderluft auch Dosierluft zugeführt. Über den Dosierluftschlauch 38 wird dem Pulverförderer 18 zusätzlich zur Förderluft auch Dosierluft zugeführt.
Da anders als bei der ersten Ausführungsform der Pulvervorratsbehälter 2 nicht bewegt wird, und auch anders als bei der zweiten Ausführungsform die Ansaugrohre 14 und 17 nicht bewegt werden, kann ein Antrieb entfallen.
Im Beschichtungsbetrieb und während des Entleerungsvorgangs arbeitet die dritte nicht erfindungsgemäße Ausführungsform auf die gleiche Weise wie die erste und die zweite (nicht erfindungsgemäße) Ausführungsform.

Vierte nicht erfindungsgemäße Ausführungsform

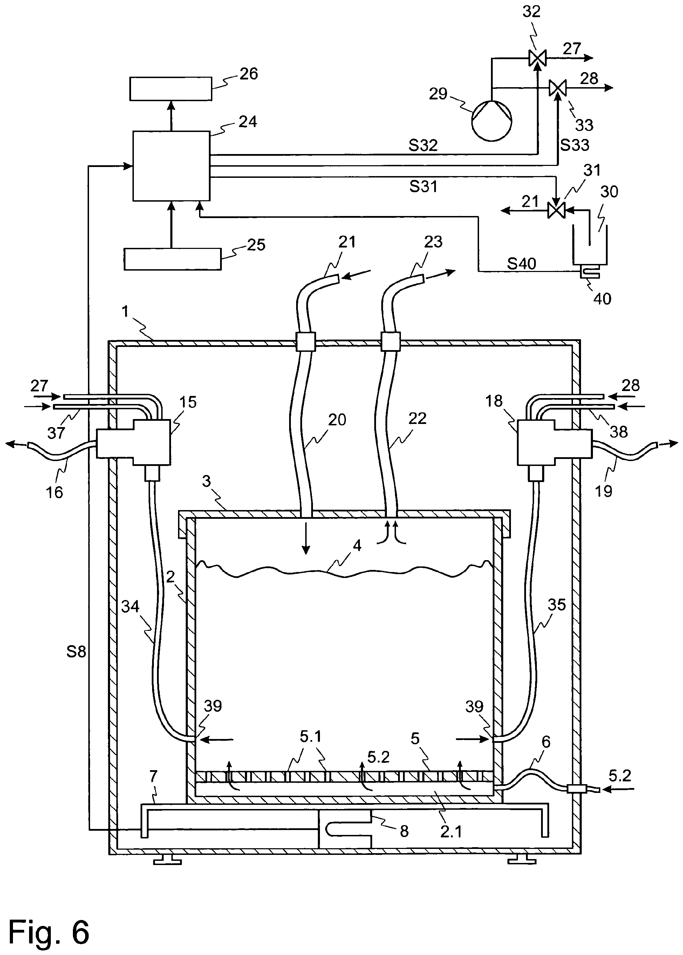

Im Folgenden wird die vierte nicht erfindungsgemäße Ausführungsform der Beschichtungspulver-Versorgungsvorrichtung anhand der Figur 6 weiter erläutert. Die vierte nicht erfindungsgemäße Ausführungsform der Beschichtungspulver-Versorgungsvorrichtung unterscheidet sich im Aufbau von der dritten nicht erfindungsgemäße Ausführungsform der Beschichtungspulver-Versorgungsvorrichtung unter anderem dadurch, dass die Pulverförderer 15 und 18 nun am Gehäuse 1 befestigt und die Förderluftleitungen 27 und 28 sowie die Dosierluftleitungen 37 und 38 als Rohre ausgebildet sind.

Zudem sind statt der Ansaugrohre 14 und 17 nun Ansaugschläuche 34 und 35 vorhanden. Die Ansaugschläuche 34 und 35 sind so flexibel, dass sie die während des Beschichtungsbetriebs mit der Waage 8 durchgeführten Wägungen nicht beeinflussen. Durch zu verschiedenen Zeitpunkten durchgeführte Differenzmessungen können die durch die Ansaugschläuche 34 und 35 erzeugten Einflüsse auf die Wägung auch kompensiert werden. Für eine störungsfreie Messung ist es von Vorteil, wenn jegliche Kräfte zwischen dem Pulverförderer 15 und dem Pulvervorratsbehälter 2 sowie zwischen dem Pulverförderer 18 und dem Pulvervorratsbehälter 2 vermieden werden beziehungsweise annähernd konstant sind, so dass sie durch Differenzmessungen kompensiert werden können.

Im Beschichtungsbetrieb und während des Entleerungsvorgangs arbeiten die vier Ausführungsformen auf die gleiche Weise.

Den verschiedenen Ausführungsformen ist gemeinsam, dass mit Hilfe der Waage 8 und der Steuerung 24 der Füllstand im Vorratsbehälter 2 ermittelt werden kann. Damit kann beispielsweise ein optisches oder akustisches Signal abgegeben werden, wenn der Füllstand im Vorratsbehälter 2 einen minimalen Wert unterschreitet oder einen maximalen Wert überschreitet. Zudem ist es möglich, dass die Steuerung 24 automatisch eingreift, wenn ein bestimmter Füllstandsgrenzwert erreicht wird.

Die vorhergehende Beschreibung der Ausführungsbeispiele gemäss der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen. So sind beispielsweise auch Ausführungen mit mehr als zwei Pulverförderern möglich.

Bezugszeichenliste

| | |
|---|---|
| 1 | Gehäuse |
| 1.1 | Zwischenboden |
| 1.2 | Öffnung |
| 1.3 | Öffnung |
| 1.4 | Öffnung |
| 2 | Pulverbehälter |
| 2.1 | Fluidisierluftkammer |
| 3 | Deckel |
| 3.1 - 3.4 | Öffnungen im Deckel |
| 4 | Pulver |
| 5 | Fluidisierboden |
| 5.1 | Fluidisierluftöffnungen |
| 5.2 | Fluidisierluft |
| 6 | Schlauch für Fluidisierluft |
| 7 | obere Bodenplatte |
| 7.1 | Bohrung |
| 7.2 | Bohrung |
| 8 | Waage |
| 9 | untere Bodenplatte |
| 10 | Stange |
| 11 | Stange |
| 12 | Pneumatikzylinder |
| 12.1 | Kolben |
| 13 | Absaugrohr |
| 13.1 - 13.4 | Absaugschlitze |
| 13.5 | Strömungsrichtung der Absaugluft |
| 14 | Ansaugrohr |
| 15 | Pulverpumpe |
| 16 | Pulverschlauch |
| 17 | Ansaugrohr |
| 18 | Pulverpumpe |
| 19 | Pulverschlauch |
| 20 | Pulverrohr |
| 21 | Pulverschlauch |
| 22 | Absaugrohr |
| 23 | Absaugschlauch |
| 24 | Steuerung |
| 25 | Tastatur |
| 26 | Anzeige |
| 27 | Förderluft |
| 28 | Förderluft |
| 29 | Druckluftquelle |
| 30 | Vorratsbehälter |
| 31 | Ventil |
| 32 | Ventil |
| 33 | Ventil |
| 34 | Ansaugschlauch |
| 35 | Ansaugschlauch |
| 36 | Träger |
| 37 | Dosierluftschlauch |
| 38 | Dosierluftschlauch |
| 39 | Auslassöffnung |
| 40 | Waage |
| S8 | Messsignal |
| S12 | Stellsignal |
| S31 | Stellsignal |
| S32 | Stellsignal |
| S33 | Stellsignal |
| S40 | Messsignal |

**Patentansprüche**

1. Beschichtungspulver-Versorgungsvorrichtung,

- mit einem Pulvervorratsbehälter (2),
- mit einem Pulverförderer (14, 15) mit einem Ansaugrohr (14), um Pulver aus dem Pulvervorratsbehälter (2) heraus zu fördern,
- mit einer Waage (8), um das im Pulvervorratsbehälter (2) befindliche Pulver (4) zu wiegen, **gekennzeichnet durch**
- eine Hubeinrichtung (12), um den Pulvervorratsbehälter (2) nach oben und unten bewegen zu können, und

- eine Absaugeinrichtung (13), die eine Absaugöffnung (13.1) aufweist, **durch** die das Ansaugrohr (14) ragt.

2.  Beschichtungspulver-Versorgungsvorrichtung nach Patentanspruch 1,
    mit einer Halterung (1) zum Halten des Pulverförderers (14, 15), die derart ausgebildet ist, dass der Pulverförderer (14, 15) durch die Waage (8) nicht mitgewogen wird.

3.  Beschichtungspulver-Versorgungsvorrichtung nach Patentanspruch 1 oder 2,
    bei der die Waage (8) unter dem Pulvervorratsbehälter (2) angeordnet ist.

4.  Beschichtungspulver-Versorgungsvorrichtung nach einem der Patentansprüche 1 bis 3,
    mit einer Steuerung (24), die derart ausgebildet und betreibbar ist, dass sie das Messsignal der Waage (8) auswertet um die Pulvermenge im Pulvervorratsbehälter (2) zu ermitteln.

5.  Beschichtungspulver-Versorgungsvorrichtung nach einem der Patentansprüche 1 bis 4,
    mit einer Leitung (20) um Pulver in den Pulvervorratsbehälter (2) zu transportieren.

6.  Beschichtungspulver-Versorgungsvorrichtung nach einem der Patentansprüche 1 bis 5,
    mit einer Absaugleitung (22), um Luft aus dem Pulvervorratsbehälter (2) zu saugen.

7.  Beschichtungspulver-Versorgungsvorrichtung nach einem der Patentansprüche 1 bis 6,
    bei der der Pulvervorratsbehälter (2) eine Fluidisiereinheit (5) aufweist.

8.  Pulverbeschichtungsanlage mit einer Beschichtungspulver-Versorgungsvorrichtung nach einem der Patentansprüche 1 bis 7,

    - mit einem weiteren Pulvervorratsbehälter (30), um Pulver für die Beschichtungspulver-Versorgungsvorrichtung vorzuhalten, und
    - mit einer weiteren Waage (40), um das im weiteren Pulvervorratsbehälter (30) befindliche Pulver zu wiegen.

9.  Verwendung der Beschichtungspulver-Versorgungsvorrichtung nach einem der Patentansprüche 1 bis 7,
    in einer Pulverbeschichtungsanlage.

10. Verfahren zum Betreiben der Beschichtungspulver-Versorgungsvorrichtung nach einem der Patentansprüche 1 bis 9,
    bei dem das von der Waage (8) erzeugte Messsignal (S8) herangezogen wird, um die im Pulvervorratsbehälter (2) befindliche Pulvermenge zu ermitteln.

11. Verfahren zum Betreiben der Beschichtungspulver-Versorgungsvorrichtung nach einem der Patentansprüche 1 bis 10,
    bei dem in bestimmten zeitlichen Abständen die im Pulvervorratsbehälter (2) befindliche Pulvermenge und daraus die Änderung der Pulvermenge im Pulvervorratsbehälter (2) ermittelt wird.

12. Verfahren zum Betreiben der Beschichtungspulver-Versorgungsvorrichtung nach einem der Patentansprüche 1 bis 11,
    bei dem das Ansaugrohr (14) des Pulverförderers (15) aus dem Pulvervorratsbehälter (2) heraus bewegt wird und dabei vom am Ansaugrohr (14) anhaftenden Pulver befreit wird.

13. Verfahren zum Betreiben der Pulverbeschichtungsanlage nach einem der Patentansprüche 8 bis 12,
    bei dem in bestimmten zeitlichen Abständen die im weiteren Pulvervorratsbehälter (30) befindliche Pulvermenge und daraus der Gesamtpulververbrauch ermittelt wird.

## Claims

1.  A coating powder supply device,

    - comprising a powder storage container (2),
    - comprising a powder conveyor (14, 15) comprising an intake pipe (14) for conveying powder out of the powder storage container (2),
    - comprising a set of scales (8) for weighing the powder (4) located in the powder storage container (2),

    **characterized by**

    - a lifting arrangement (12) in order to be able to move the powder storage container (2) upward and downward, and
    - a suction apparatus (13), which has a suction opening (13.1), through which the intake pipe (14) projects.

2.  The coating powder supply device according to patent claim 1,
    comprising a holder (1) for holding the powder conveyor (14, 15), which is embodied in such a way that the powder conveyor (14, 15) is not also weighed by the set of scales (8).

3.  The coating powder supply device according to patent claim 1 or 2,
    in the case of which the set of scales (8) is arranged underneath the powder storage container (2).

4. The coating powder supply device according to any one of patent claims 1 to 3, comprising a controller (24), which is embodied and can be operated in such a way that it evaluates the measuring signal of the set of scales (8) in order to determine the powder quantity in the powder storage container (2).

5. The coating powder supply device according to any one of patent claims 1 to 4, comprising a line (20) for transporting powder into the powder storage container (2).

6. The coating powder supply device according to any one of patent claims 1 to 5, comprising a suction line (22) to draw air by suction from the powder storage container (2).

7. The coating powder supply device according to any one of patent claims 1 to 6, in the case of which the powder storage container (2) has a fluidization unit (5).

8. A powder coating installation comprising a coating powder supply device according to any one of patent claims 1 to 7,

   - comprising a further powder storage container (30) for holding powder available for the coating powder supply device, and
   - comprising a further set of scales (40) for weighing the powder located in the further powder storage container (30).

9. A use of the coating powder supply device according to any one of patent claims 1 to 7, in a powder coating installation.

10. A method for operating the coating powder supply device according to any one of patent claims 1 to 9, in the case of which the measuring signal (S8) generated by the set of scales (8) is used to determine the powder quantity located in the powder storage container (2).

11. The method for operating the coating powder supply device according to any one of patent claims 1 to 10, in the case of which the powder quantity located in the powder storage container (2) and from this changes in powder quantity in the powder storage container (2) are determined at certain time intervals.

12. The method for operating the coating powder supply device according to any one of patent claims 1 to 11, in the case of which the intake pipe (14) of the powder conveyor (15) is moved out of the powder storage container (2) and is freed thereby from powder adhering to the intake pipe (14).

13. The method for operating the powder coating installation according to any one of patent claims 8 to 12, in the case of which the powder quantity located in the further powder storage container (30) and from this the total powder consumption is determined at certain time intervals.

## Revendications

1. Dispositif d'alimentation en poudre de revêtement,

   - avec un réservoir de poudre (2),
   - avec un convoyeur de poudre (14, 15) avec un tuyau d'aspiration (14) pour convoyer de la poudre hors du réservoir de poudre (2),
   - avec une balance (8) pour peser la poudre (4) se trouvant dans le réservoir de poudre (2),

   **caractérisé par**

   - un dispositif de levage (12) pour pouvoir déplacer le réservoir de poudre (2) vers le haut et le bas, et
   - un dispositif d'aspiration (13) qui présente une ouverture d'aspiration (13.1) à travers laquelle le tuyau d'aspiration (14) dépasse.

2. Dispositif d'alimentation en poudre de revêtement selon la revendication 1, avec une fixation (1) pour le maintien du convoyeur de poudre (14, 15) qui est réalisée de telle sorte que le convoyeur de poudre (14, 15) n'est pas pesé par la balance (8).

3. Dispositif d'alimentation en poudre de revêtement selon la revendication 1 ou 2, dans lequel la balance (8) est disposée sous le réservoir de poudre (2).

4. Dispositif d'alimentation en poudre de revêtement selon une des revendications 1 à 3, avec une commande (24) qui est réalisée et peut être exploitée de telle sorte qu'elle évalue le signal de mesure de la balance (8) pour déterminer la quantité de poudre dans le réservoir de poudre (2).

5. Dispositif d'alimentation en poudre de revêtement selon une des revendications 1 à 4, avec une conduite (20) pour transporter de la poudre dans le réservoir de poudre (2).

6. Dispositif d'alimentation en poudre de revêtement selon une des revendications 1 à 5, avec une conduite d'aspiration (22) pour aspirer de l'aide du réservoir de poudre (2).

7. Dispositif d'alimentation en poudre de revêtement selon une des revendications 1 à 6, dans lequel le réservoir de poudre (2) présente un module de fluidification (5).

8. Installation de revêtement en poudre avec un dispositif d'alimentation en poudre de revêtement selon une des revendications 1 à 7,

   - avec un autre réservoir de poudre (30) pour fournir de la poudre pour le dispositif d'alimentation en poudre de revêtement, et
   - avec une autre balance (40) pour peser la poudre se trouvant dans l'autre réservoir de poudre (30).

9. Utilisation du dispositif d'alimentation en poudre de revêtement selon une des revendications 1 à 7, dans une installation de revêtement en poudre.

10. Procédé d'exploitation du dispositif d'alimentation en poudre de revêtement selon une des revendications 1 à 9, dans lequel le signal de mesure (S8) généré par la balance (8) est utilisé pour déterminer la quantité de poudre se trouvant dans le réservoir de poudre (2).

11. Procédé d'exploitation du dispositif d'alimentation en poudre de revêtement selon une des revendications 1 à 10, dans lequel la quantité de poudre se trouvant dans le réservoir de poudre (2) est déterminée à intervalles temporels déterminés et la modification de la quantité de poudre dans le réservoir de poudre (2) est déterminée à partir de celle-ci.

12. Procédé d'exploitation du dispositif d'alimentation en poudre de revêtement selon une des revendications 1 à 11, dans lequel le tuyau d'aspiration (14) du convoyeur de poudre (15) est déplacé hors du réservoir de poudre (2) et est libéré ce faisant de la poudre adhérant au tuyau d'aspiration (14).

13. Procédé d'exploitation de l'installation de revêtement en poudre selon une des revendications 8 à 12, dans lequel la quantité de poudre se trouvant dans l'autre réservoir de poudre (30) est déterminée à intervalles temporels déterminés et la consommation de poudre totale est déterminée à partir de celle-ci.

Fig. 1

EP 2 218 514 B1

Fig. 2

Fig. 3

Fig. 4

Fig. 5

EP 2 218 514 B1

Fig. 6

16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005060833 A1
- EP 1222963 A
- DE 102005056006 B4
- DE 102005006522 B3